# EUROPEAN PATENT APPLICATION

(11) **EP 0 678 350 A1**
(43) Date of publication of application: **25.10.1995**
(21) Application number: 95201009.8
(22) Date of filing: 20.04.1995
(51) Int. Cl.: B21D 5/04, B23Q 1/00

(54) **Rigid joint for parts of pieces stressed by large forces**

(30) Priority: 22.04.1994 IT MI940782
(71) Applicant: SALVAGNINI ITALIA S.p.A., I-36040 Sarego (Vicenza) (IT)
(72) Inventor: Gallo, Maurizio, I-35043 Monselice (Padova) (IT)
(74) Representative: Marchi, Massimo

(57) **Abstract**

The joint is capable of joining two parts (1, 2) of a piece having faces (5, 6) in contact and faces (7, 8) separated by a wedge-shaped element (9) provided with contact faces (10) and detachable connecting members (11), so as to provide a predetermined pressure and a continuous contact on the faces in contact (5, 6, 7, 8, 10).

## Description

The present invention relates to a rigid joint for parts of pieces stressed by large forces.

In tools mechanics the case is frequent that in an undivided piece of a machine it is possible to distinguish a non-variable portion, operationally connected to other members of the machine that transmit motion to it, and a variable portion, whose surfaces go into contact with the material being transformed in the machine and are subject to wear.

Said second portion may be variable from one machine to another of the same type in order to be able to perform different functions or it may be variable on one machine itself due to the effect of wear.

Such variability creates the need of dividing the piece of the machine into two parts, especially if the first portion is much more expensive that the second portion, and of fastening the two parts one to the other. In this, when the variable portion has to assume a different form in order to carry out a different function or when it has changed shape due to the effect of wear and it no longer corresponds to its function, the second part may be replaced without separating from the rest of the machine the first part that is more expensive and also more difficult to disassemble.

A generally used system for joining the two parts of the piece together consists in the use of a series of screws distributed in areas of the contact surfaces, wherein the traction forces are concentrated.

The main drawback of such a jointing system is the reduction of the resisting material to the mere material of the screws and thus a drop of the strength of the piece of the machine that consists of two parts with respect to that of the undivided piece.

The object of the present invention is to accomplish a joint between two parts of a piece of a machine that joins them firmly, in a detachable manner, and allows stresses to be transmitted from one part to the other distributing them over the contact faces without any discontinuity.

Said object is attained, according to the present invention, by means of a joint capable of joining two parts of a piece, characterized in that said two parts are provided with male and female coupling elements that are inserted one inside the other, being in contact along respective first faces, and have respective spaced second faces between which there is inserted a wedge-shaped element that is fastened to one of said parts by means of detachable connecting means, so as to achieve a predetermined pressure and a continuous contact on said second faces and between said first faces in contact.

The thrust of the wedge-shaped element, achieved by the connecting means, eliminates all the clearances present between the parts of the piece and between these and the wedge-shaped element and generates a pressure between the faces in contact that makes the two parts integral. The external forces applied to the two parts of the piece joined in this way, whose resultant is nil, increase or decrease the pressure on the contact faces, but do not eliminate it at any point, with the consequence that contact is preserved throughout the whole surface of the faces.

With respect to the jointings with screws, the joint accomplished according to the invention has the advantage that the tension concentrated on the small area of the core of the screws is replaced by a compression distributed over a continuous surface, with a much larger area, such as that of the contact faces.

Another advantage of the joint according to the invention is in the fact that, in whatever way the external forces are applied and oriented, some of the contact faces are stressed by mainly orthogonal forces, whereas in the joints with screws the contact surfaces can at times be subject to tangential forces to which only friction opposes.

As a consequence of all this the joint according to the invention is more rigid and stronger that a screw-based joint.

The features of the present invention will be made more evident by the following description of embodiments, illustrated as non-limiting examples in the enclosed drawings, wherein:
Fig. 1 is a side view, partialy sectioned, of a joint accomplished according to the invention;
Fig. 2 is a side view, partialy sectioned, of a variation of the joint of Fig. 1;
Fig. 3 is a side view, partialy sectioned, of a bending blade of a machine for bending sheet metal, provided with a joint according to the invention.

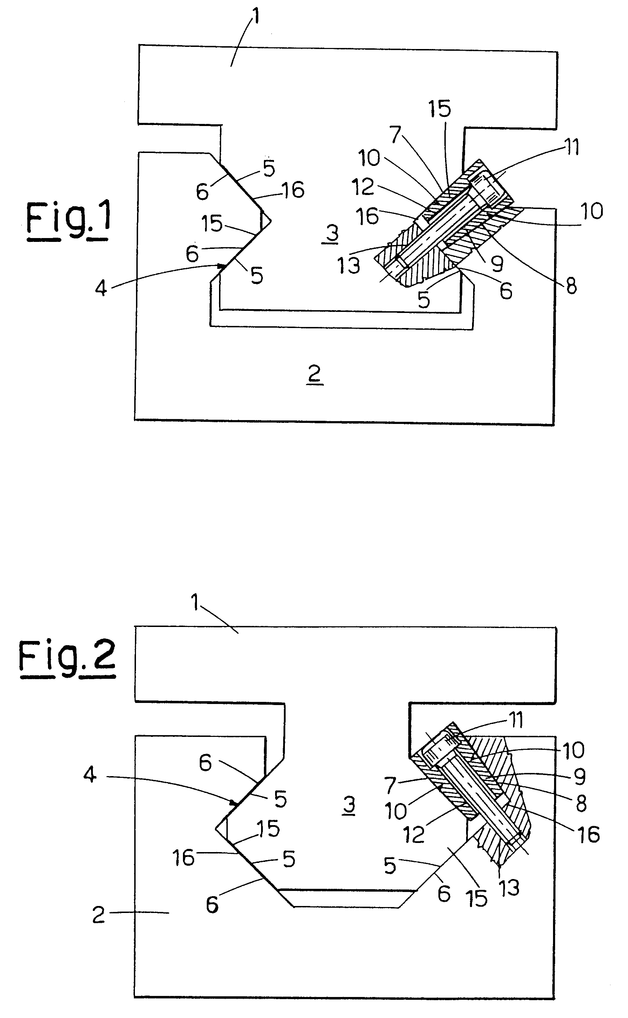

In Fig. 1 there are represented two parts 1 and 2 of a piece to be joined. The parts 1 and 2 are provided with respective male and female coupling elements 3 and 4 that are inserted one inside the other by means of repective cavities 16 and protrusions 15 formed by respective convergent faces 5, 7 and 6, 8, between which dyhedral angles are included. The coupling elements 3 and 4 are in contact along the respective plane faces 5 and 6 and have spaced faces 7 and 8. Between the facing spaced faces 7 and 8 there is interposed a wedge 9 provided with faces 10 inclined at predetermined angles with respect to a longitudinal median plane, or that extends in a direction perpendicular to the plane of the sheet. The wedge 9 is fastened to the coupling element 3 of the part 1 by means of a series of screws 11 that pass in holes 12 of the wedge 9 and screw up in holes 13 of the coupling element 3.

The wedge 9, pulled by the screws 11 toward the coupling element of the part 1, exerts a pressure on the faces 7 and 8 by means of the faces 10 and generates pressures between the contact faces 5 and 6, taking up all the clearances present between the faces 5 and 6 and making the parts 1 and 2 firmly integral.

The presence of the wedge 9 and of the screws 11 avoids resorting to machinings of very high precision (lapping) of the surfaces of the contact faces 5 and 6, in order to eliminate the clearances present between them and to compress the faces together with known forces; this facilitates assembly and disassembly of the coupling elements 3 and 4, that, on the other hand, are difficult, in case of faces machined with a high surface finish, if damage to the contact faces are to be avoided.

In Fig. 2 there is shown a variation of the joint of Fig. 1 wherein the homologous parts are indicated with the same numbers. In this case the male and female coupling elements 3 and 4 are provided with protrusions 15 and cavities 16, respectively, and the spaced faces 7 and 8 are orthogonal to those of the joint of Fig. 1 and the wedge 9, interposed between them, is fastened to the coupling element 4 of the part 2 by means of screws 11.

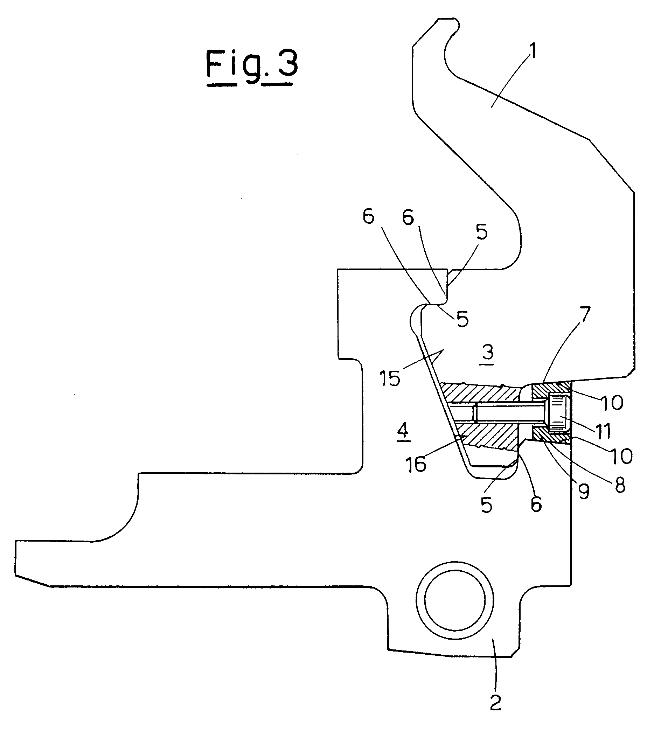

In Fig. 3 there are shown parts 1 and 2 that all together assume the characteristic form of a bending blade of a machine for bending sheet metal. In this case the part 1 is the operating portion of the blade and goes into contact with the sheet metal to be bent; it is thus subject to wear and it has to change profile for different types of bends, while the part 2 is the kinematic part of the blade, that transmits the motion to and guides the operating portion along suitable trajectories, as illustrated in the patent EP-0 023 894. The parts 1 and 2 are joined by means of the coupling elements 3 and 4, the wedge 9 and the screws 11. The coupling element 3 has a tang 15 provided at one end with a pair of plane faces 5 substantially orthogonal to one another and provided at another end with plane faces 5 and 7 also substantially orthogonal to one another. The coupling element 4 has a cavity 16 provided at one end with a pair of plane faces 6 substantially orthogonal to one another, that are coupled with the faces 5 of the tang 15, and provided at another end with plane faces 6 and 8 also substantially orthogonal to one another, that are coupled with a face 5 of the tang 15 and with a face 10 of the wedge 9, respectively. The other face 10 of the wedge 9 is coupled with the face 7 of the tang 15. The contact faces 5, 6, 7, 8, 10 extend in the direction of a longitudinal axis of the blade and are substantially orthogonal to the directions of the forces, perpendicular and parallel to the sheet metal to be bent, that stress the blade during bending operations, so as to provide reactions to such stresses.

The wedge 9 is pulled by the series of screws 11 toward the part 1 and exerts a pressure on the faces 7 and 8, bringing the faces 5 and 6 close to one another and generating high pressures on all the faces in contact.

The portion 1 of the bending blade, that during bending operations is subject to forces of very different intensity and direction, finds in the five points of contact between the faces 5 and 6 of the portions 1 and 2 of the blade reactions distributed over continuous surfaces, as long as the blade itself. Thanks to the small wedging angle of the faces 10 of the wedge 9, less than the friction angle, the force of the screws 11, is transmitted multiplied to the contact surfaces.

## Claims

1. Joint capable of joining two parts (1, 2) of a piece, characterized in that said two parts are provided with male and female coupling elements (3, 4) that are inserted one inside the other, being in contact along respective first faces (5, 6), and have respective spaced second faces (7, 8) between which there is inserted a wedge-shaped element (9) fastened to one of said parts (1, 2) by means of detachable connecting means (11), so as to achieve a predetermined pressure and a continuous contact on said second faces (7, 8) and between said first faces in contact (5, 6).

2. Joint according to claim 1, characterized in that said detachable connecting means (11) are formed by a series of screws.

3. Joint according to claim 1, characterized in that said wedge-shaped element (9) is formed by a wedge provided with flat faces (10) inclined at a predetermined angle with respect to a longitudinal median plane.

4. Joint according to claim 1, characterized in that pairs of said first and second faces (5, 6, 7, 8) of said coupling elements (3, 4) are convergent and between them there are included dihedral angles, that form cavities and protrusions (15, 16).

5. Joint according to claim 1, characterized in that said male coupling element (3) belongs to a first operating portion (1) of a blade for bending sheet metal and said female coupling element (4) belongs to a second kinematic portion (2) of said blade, said coupling element (3) having a tang (15) provided at one end with a pair of faces (5) substantially orthogonal to one another and provided at another end with faces (5, 7) also substantially orthogonal to one another, the coupling element (4) having a cavity (16) provided at one end with a pair of faces (6) substantially orthogonal to one another, that couple with the faces (5) of said tang (15), and provided at another end with faces (6, 8) also substantially orthogonal to one another, that couple with a face (5) of said tang (15) and with a face (10) of said wedge-shaped element (9), respectively, the other face (10) of said wedge-shaped element (9) being coupled with said face (7) of said tang (15), a series of screws (11) being screwed into said wedge-shaped element (9) and in said first portion of blade (1), said contact faces (5, 6, 7, 8, 10) extending in direction of a longitudinal axis of the blade and being substantially orthogonal to the directions of the forces, perpendicular and parallel to the sheet metal to be bent, that stress the blade during bending operations, so as to provide reactions to such stresses.

6. Joint according to claim 5, characterized in that said wedge-shaped element (9) has faces (10) having a small angle of inclination with respect to a median longitudinal plane.
